# EUROPEAN PATENT APPLICATION

(11) **EP 4 686 110 A1**
(43) Date of publication of application: **28.01.2026**
(21) Application number: 24795692.3
(22) Date of filing: 18.03.2024
(51) Int. Cl.: H04B 7/06

(54) **COMMUNICATION APPARATUS AND COMMUNICATION DEVICE**

(30) Priority: 24.04.2023 CN 202310465996
(71) Applicant: Huawei Technologies Co., Ltd., Shenzhen, Guangdong 518129 (CN)
(72) Inventor: YANG, Shilin, Shenzhen, Guangdong 518129 (CN); CHEN, Jingtao, Shenzhen, Guangdong 518129 (CN); YANG, Bo, Shenzhen, Guangdong 518129 (CN); MA, Chuanhui, Shenzhen, Guangdong 518129 (CN)
(74) Representative: Goddar, Heinz J.
(86) International application number: PCT/CN2024/082207
(87) International publication number: WO 2024/222309

(57) **Abstract**

This application provides a communication apparatus and a communication device, and relates to the field of communication technologies, to simplify the communication apparatus and improve performance of the communication apparatus while implementing a frequency division multi-beam. The communication apparatus includes at least one first delayer and a plurality of channels, where each of the plurality of channels has a first end and a second end, there is one first delayer coupled between first ends of any two adjacent channels in the plurality of channels, and second ends of the plurality of channels are coupled to a plurality of antenna elements in an antenna array; and each of the plurality of channels includes a second delayer and a first phase shifter that are coupled.

## Description

This application claims priority to Chinese Patent Application No. 202310465996.2, filed with the China National Intellectual Property Administration on April 24, 2023 and entitled "COMMUNICATION APPARATUS AND COMMUNICATION DEVICE", which is incorporated herein by reference in its entirety.

### TECHNICAL FIELD

This application relates to the field of communication technologies, and in particular, to a communication apparatus and a communication device.

### BACKGROUND

A U6G (upper 6 gigahertz) base station system is an important part of 5.5G coverage networking. The U6G base station system employs a hybrid beamforming (hybrid beamforming, HBF) architecture in a vertical direction. In this architecture, the base station system typically performs beam sweeping across various orientations in a time division multiplexing mode. However, this architecture has the following challenges: Within dense urban enhanced mobile broadband (enhanced mobile broadband, eMBB) scenarios, multi-beam sweeping prolongs a channel estimation periodicity, causing channel aging; spatial domain information is incomplete in a single beam; and user frequency division experience deteriorates during data transmission, reducing a possibility of successful pairing. These issues all restrict a communication capacity of a base station cell.

To resolve the foregoing problems, a dispersion architecture-based base station system emerges, enabling a frequency division multi-beam to enhance the communication capacity of the base station cell. However, in current technologies, the dispersion architecture-based base station system has high complexity and low performance.

### SUMMARY

This application provides a communication apparatus and a communication device, to simplify the communication apparatus and improve performance of the communication apparatus while implementing a frequency division multi-beam.

To achieve the foregoing objectives, the following technical solutions are used in embodiments of this application.

According to a first aspect, a communication apparatus is provided. The communication apparatus includes at least one first delayer and a plurality of channels, where each of the plurality of channels has a first end and a second end, there is one first delayer coupled between first ends of any two adjacent channels in the plurality of channels, and second ends of the plurality of channels are coupled to a plurality of antenna elements in an antenna array; and each of the plurality of channels includes a second delayer and a first phase shifter that are coupled. The second delayer in each channel may be configured to compensate for a delay of a signal transmitted on the channel, so that the second delayer may also be referred to as a delay compensator. In an example, the communication apparatus includes a first delayer, a first channel, and a second channel, where the first delayer is coupled to a first end of the first channel and a first end of the second channel, and a second end of the first channel and a second end of the second channel are separately coupled to one antenna element in the antenna array. Both the first channel and the second channel include a second delayer and a first phase shifter that are coupled.

In the foregoing technical solution, the at least one first delayer and the second delayers in the plurality of channels form a series-parallel feeding dispersion architecture, so that the communication apparatus can implement a frequency division multi-beam, and complexity of the first delayer can be reduced compared with that in a parallel-feeding dispersion architecture. In addition, delays of the at least one first delayer and the second delayers in the plurality of channels are set, so that delay differences between the plurality of channels may be further enabled to be 0, thereby implementing a non-dispersive beam. In addition, the first phase shifters of all channels in the plurality of channels are used together, so that the communication apparatus can implement a beam sweeping function in both the frequency division multi-beam and the non-dispersive beam, thereby improving performance of the communication apparatus.

In a possible implementation of the first aspect, each first delayer in the at least one first delayer includes a first delay circuit, a second delay circuit, and a third delay circuit with different delays and disposed in parallel, and a delay of the second delay circuit and a delay of the third delay circuit are both greater than a delay of the first delay circuit. In the foregoing possible implementation, each first delayer includes the first delay circuit, the second delay circuit, and the third delay circuit that have the different delays and that are disposed in parallel, and the first delayer may selectively provide a delay for the communication apparatus by using one of the first delay circuit, the second delay circuit, and the third delay circuit, thereby simplifying complexity of the first delayer.

In a possible implementation of the first aspect, the second delayer of each of the plurality of channels includes a fourth delay circuit and a fifth delay circuit that are disposed in parallel, and a delay of the fifth delay circuit is equal to a delay of the fourth delay circuit and an integer multiple of a preset delay. In the foregoing possible implementation, each second delayer includes the fourth delay circuit and the fifth delay circuit that are disposed in parallel, and the second delayer may selectively provide a delay for the communication apparatus by using one of the fourth delay circuit and the fifth delay circuit, thereby simplifying complexity of the second delayer.

In a possible implementation of the first aspect, the delay of the first delay circuit is equal to the preset delay. In the foregoing possible implementation, the delay of the first delay circuit is set to be equal to the preset delay, so that delay differences in the plurality of channels are 0, thereby implementing a non-dispersive beam.

In a possible implementation of the first aspect, the communication apparatus further includes a switching switch, where a first selection end of the switching switch is coupled to a first end of a 1^{st} channel in the plurality of channels, and a second selection end of the switching switch is coupled to a first end of a last channel in the plurality of channels. In the foregoing possible implementation, when the switching switch is configured to select the first end of the 1^{st} channel in the plurality of channels, when the communication apparatus implements a frequency division multi-beam function, a corresponding dispersion spreading direction is from the 1^{st} channel to the last channel; or when the switching switch is configured to select the first end of the last channel in the plurality of channels, when the communication apparatus implements the frequency division multi-beam function, a corresponding dispersion spreading direction is from the last channel to the 1^{st} channel. In other words, a dispersion spreading direction of the communication apparatus may be changed by using the switching switch, thereby improving flexibility of the frequency division multi-beam and integrity of spatial domain information.

In a possible implementation of the first aspect, the communication apparatus further includes a balun circuit, a first single port and a second single port of the balun circuit are respectively coupled to the first selection end and the second selection end of the switching switch, and a differential port of the balun circuit is coupled to both the first end of the 1^{st} channel in the plurality of channels and the first end of the last channel in the plurality of channels. In the foregoing possible implementation, the balun circuit may be configured to convert a single-ended signal into a differential signal, so that the communication apparatus may be configured to correspondingly process and transmit the differential signal, thereby further improving performance of the communication apparatus.

In a possible implementation of the first aspect, the plurality of antenna elements include a plurality of first antenna elements, and the second end of each of the plurality of channels is coupled to one first antenna element.

In a possible implementation of the first aspect, the plurality of antenna elements further include a plurality of second antenna elements, and the second end of each of the plurality of channels is further coupled to one second antenna element. In the foregoing possible implementation, when each of the plurality of channels is coupled to at least two antenna elements in the antenna array, complexity of the communication apparatus can be reduced when a scale of the antenna array is large, thereby reducing costs and an area of the communication apparatus.

In a possible implementation of the first aspect, each of the plurality of channels further includes a second phase shifter coupled in parallel to the first phase shifter, the first phase shifter is correspondingly coupled to the first antenna element, and the second phase shifter is correspondingly coupled to the second antenna element. In the foregoing possible implementation, when each channel is coupled to the at least two antenna elements, and each antenna element in the at least two antenna elements is correspondingly coupled to one phase shifter, flexibility of adjusting a signal phase corresponding to each antenna element can be improved.

In a possible implementation of the first aspect, each of the plurality of channels further includes an amplifier coupled to the first phase shifter. In the foregoing possible implementation, when each channel further includes the amplifier, and the amplifier is coupled after the phase shifter of the channel, impact of insertion losses of the delayers and the phase shifters on EIRP of the communication apparatus can be reduced.

In a possible implementation of the first aspect, the communication apparatus further includes a first mixer coupled to the first ends of the plurality of channels; or each of the plurality of channels further includes a second mixer coupled between the second delayer and the first phase shifter. In the foregoing possible implementation, when the first mixer is coupled before the plurality of channels, a signal transmitted by the first mixer to the plurality of channels is a radio frequency signal, and the at least one first delayer and the second delayer of each of the communication apparatus may be configured to perform delay processing on the radio frequency signal; or when each channel further includes the second mixer coupled after the second delayer, the at least one first delayer and the second delayer of each of the communication apparatus may be configured to perform delay processing on an intermediate frequency signal, and a signal obtained through the delay processing in each channel is converted into a radio frequency signal by using the second mixer.

In a possible implementation of the first aspect, the communication apparatus further includes a control circuit, configured to control the at least one first delayer and the second delayer of each of the plurality of channels. In the foregoing possible implementation, when the communication apparatus is configured to implement the frequency division multi-beam function, the control circuit may control the at least one first delayer by using a same control signal, and control the second delayers in the plurality of channels by using a same control signal, so that complexity of the control circuit can be simplified.

In a possible implementation of the first aspect, the communication apparatus further includes a transceiver circuit coupled to the first ends of the plurality of channels. Optionally, the transceiver circuit includes but is not limited to one or more of a digital-to-analog converter, an analog-to-digital converter, a duplexer, and an amplifier.

According to another aspect of this application, a chip module is further provided. The chip module includes a chip and a package substrate. The chip may include any communication apparatus provided above. The package substrate may include the antenna array that has the plurality of antenna elements provided above. The plurality of antenna elements are coupled to the second ends of the plurality of channels in the communication apparatus.

According to still another aspect of this application, a communication device is provided. The communication device includes a digital signal processing circuit and the communication apparatus provided in any one of the first aspect or the possible implementations of the first aspect; or the communication device includes a digital signal processing circuit and the chip module provided in the another aspect.

It may be understood that, for beneficial effects that can be achieved by any chip module and any communication device provided above, refer to beneficial effects in the communication apparatus provided above. Details are not described herein again.

### BRIEF DESCRIPTION OF DRAWINGS

FIG. 1 is a diagram of a beam of a base station system according to an embodiment of this application;
FIG. 2 is a diagram of a base station system based on a series-feeding dispersion architecture according to an embodiment of this application;
FIG. 3 is a diagram of a dispersive beam according to an embodiment of this application;
FIG. 4 is a diagram of a base station system based on a parallel-feeding dispersion architecture according to an embodiment of this application;
FIG. 5 is a diagram of a structure of a communication device according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of a delay circuit according to an embodiment of this application;
FIG. 9 is a diagram of comparison between delay circuits according to an embodiment of this application;
FIG. 10 is a diagram of a frequency division multi-beam according to an embodiment of this application;
FIG. 11 is a diagram of another frequency division multi-beam according to an embodiment of this application;
FIG. 12 is a diagram of a structure of still another communication apparatus according to an embodiment of this application;
FIG. 13 is a diagram of a structure of another communication apparatus according to an embodiment of this application;
FIG. 14 is a diagram of a structure of still another communication apparatus according to an embodiment of this application;
FIG. 15 is a diagram of a structure of another communication apparatus according to an embodiment of this application;
FIG. 16 is a diagram of a structure of still another communication apparatus according to an embodiment of this application; and
FIG. 17 is a diagram of a structure of another communication apparatus according to an embodiment of this application.

### DESCRIPTION OF EMBODIMENTS

The making and use of embodiments are discussed in detail below. However, it should be understood that many applicable inventive concepts provided in this application may be implemented in a plurality of specific environments. The specific embodiments discussed are merely illustrative of specific ways to implement and use this description and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described below, related background technologies in this application are first described.

Beamforming (beamforming, BF) is a signal preprocessing technology based on antenna arrays. A directional beam is generated by adjusting a weighting coefficient of each array element (or referred to as an antenna element) in an antenna array, thereby achieving a significant array gain. Therefore, the beamforming technology has great advantages in expanding a coverage area, increasing an edge throughput, suppressing interference, and the like.

According to different processing positions and modes of beamforming, beamforming can be classified into digital beamforming (digital beamforming, DBF), analog beamforming (analog beamforming, ABF), and hybrid beamforming (hybrid beamforming, HBF). Analog beamforming typically refers to implementing beamforming in an analog domain, and adjusting an amplitude and a phase of feeding of the antenna array by using a device such as a phase shifter, to form a desired beam with high directivity. Digital beamforming typically refers to implementing beamforming in a digital domain, and a set of radio frequency links needs to be configured for each path of data, where the radio frequency links include a mixer, a power amplifier, a phase shifter, and the like. Hybrid beamforming is hybrid beamforming that combines the analog beamforming and the digital beamforming, and may perform beamforming in both the analog domain and the digital domain.

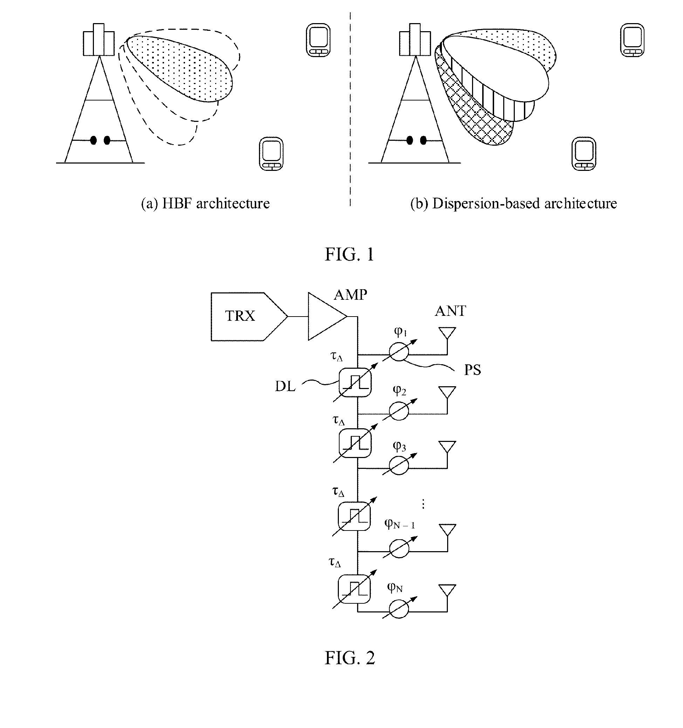

Currently, a U6G (upper 6 gigahertz) base station system is an important part of the 5.5G coverage networking. As shown in (a) in FIG. 1, the U6G base station system employs a hybrid beamforming HBF architecture in a vertical direction. In this architecture, the U6G base station system may perform communication in a beam time division sweeping manner, in other words, use a same beam to perform sweeping in different directions at different time. However, this architecture has the following challenges: Within dense urban enhanced mobile broadband (enhanced mobile broadband, eMBB) scenarios, multi-beam sweeping prolongs a channel estimation periodicity, causing channel aging; spatial domain information is incomplete in a single beam, in other words, a single beam cannot cover all spatial domain information; and frequency division of a beam cannot be implemented, causing user frequency division experience to deteriorate during data transmission, reducing a possibility of successful pairing. These issues all restrict a communication capacity of a base station cell.

To resolve the foregoing problems, a dispersion architecture-based base station system emerges, enabling a frequency division multi-beam. Dispersion is a phenomenon where a phase velocity of electromagnetic waves changes with frequencies. For example, as shown in (b) in FIG. 1, the base station system may convert a single beam into a plurality of beams with different frequencies through dispersion, in other words, the single beam is divided into the plurality of beams through frequency division multiplexing. The plurality of beams may continuously cover a target space domain of the base station system. Therefore, compared with the foregoing hybrid beamforming architecture, the dispersion architecture can avoid a time-division beam sweeping process, thereby improving a channel estimation capability and a user access opportunity and duration, and further improving an overall system communication capacity.

The foregoing frequency division multi-beam function is usually implemented by using a delayer. The delayer may also be referred to as a true time delay (true time delay, TTD). A specific implementation principle may be as follows: A delay difference between antenna elements is adjusted, so that signals with different frequencies between the antenna elements have different phase gradients, so that the signals with the different frequencies point to different angle directions in a space domain, thereby achieving an objective of a frequency division multi-beam. In addition, a dispersion spreading angle (an included angle between a direction of a beam at a highest frequency and a direction of a beam at a lowest frequency) implemented by using a delayer is coupled to a direction of a beam at a center frequency. Therefore, a component such as a phase shifter may be further added to the system, to implement arbitrary adjustment of the dispersion spreading angle and the direction of the beam at the center frequency. However, how to design and implement the foregoing base station system based on the dispersion architecture is a problem worthy of research at present.

FIG. 2 is a diagram of a base station system based on a series-feeding dispersion architecture. The base station system includes a transceiver circuit TRX, an amplifier AMP, a plurality of delayers DLs, and a plurality of channels. Each channel in the plurality of channels has a first end and a second end. The transceiver circuit TRX is coupled to a first end of the amplifier AMP, and a first end of a 1^{st} channel in the plurality of channels is coupled to a second end of the amplifier AMP. One delayer DL is coupled between first ends of any two adjacent channels in the plurality of channels. The second end of each of the plurality of channels is coupled to one antenna element ANT in an antenna array. Each channel in the plurality of channels includes one phase shifter PS.

In the base station system based on the series-feeding dispersion architecture, delays provided by the plurality of delayers DLs are the same, and phases provided by the phase shifters PSs in the plurality of channels are different. For example, the plurality of delayers DLs may include N delayers, and provided delays may all be τ△. The plurality of channels may include N channels, and phases provided by phase shifters PSs in the N channels may be φ₁, φ₂, ..., and φ_{N} respectively.

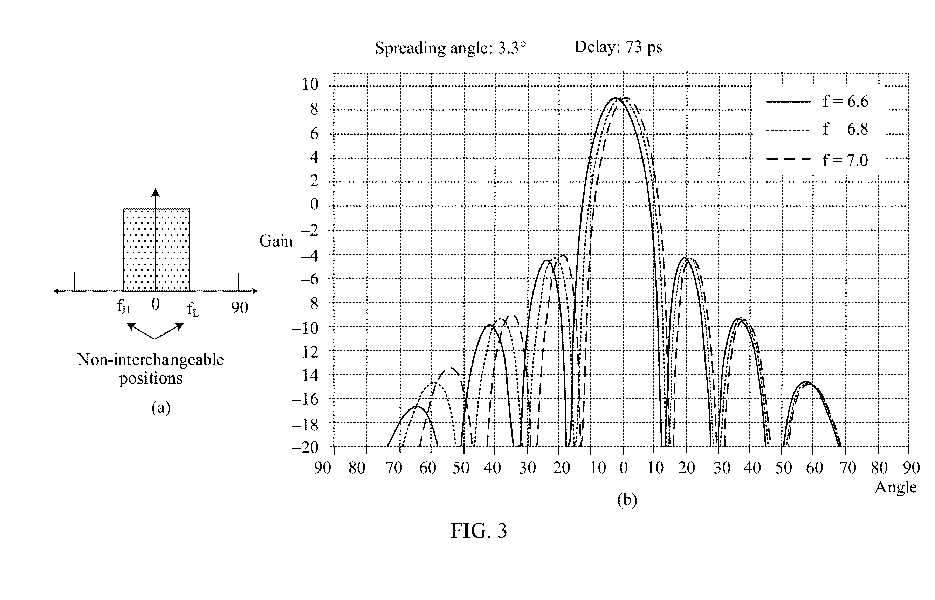

Although the foregoing base station system based on the series-feeding dispersion architecture can implement a frequency division multi-beam, the following problems exist. First, the delayer DL and the phase shifter PS are located after the amplifier AMP. Consequently, insertion losses of the delayer DL and the phase shifter PS cause a great loss to effective isotropic radiated power (effective isotropic radiated power, EIRP) performance of the base station. Second, a delay gradient direction in the architecture is unchangeable. Consequently, a spreading direction of a dispersion beam is caused to be unchangeable. This reduces configurable dimensions of the dispersion beam and reduces performance of a dispersion system. For example, as shown in (a) in FIG. 3, a spreading direction corresponding to a highest frequency f_{H} and a lowest frequency f_{L} of the dispersion beam in the architecture at an angle [-90, 90] is unchangeable. Third, due to a limitation of an actual physical structure, the delay τ△ of the delayer DL has a minimum value τₘᵢₙ, and a delay amount of 0 cannot be implemented. Consequently, the architecture cannot implement a non-dispersive characteristic beam, restricting use of the base station system in an actual process. For example, as shown in (b) in FIG. 3, for example, frequencies (unit: GHz) of the dispersion beam include f = 6.6, f = 6.8, and f = 7.0, and a corresponding spreading angle is 3.3° and a delay is 73 picoseconds (ps). Beams at the three frequencies always have a specific phase delay, and consequently, the non-dispersive characteristic beam cannot be implemented.

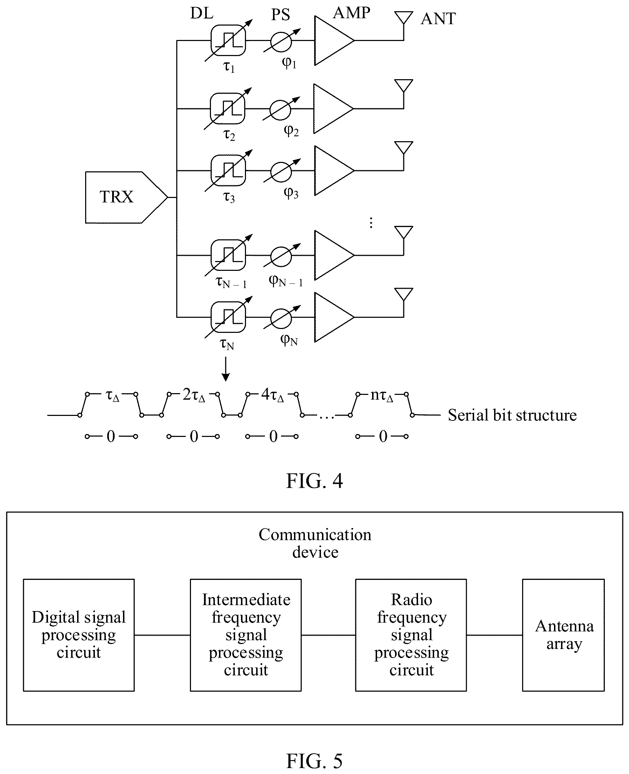

FIG. 4 is a diagram of a base station system based on a parallel-feed dispersion architecture. The base station system includes a transceiver circuit TRX and a plurality of channels. Each channel in the plurality of channels has a first end and a second end. The transceiver circuit TRX is coupled to first ends of the plurality of channels, and a second end of each of the plurality of channels is coupled to one antenna element ANT in an antenna array. Each channel in the plurality of channels includes a delayer DL, a phase shifter PS, and an amplifier AMP that are sequentially coupled in series.

In the base station system based on the parallel-feeding dispersion architecture, delays provided by the delayers DLs in the plurality of channels are different, and phases provided by the phase shifters PSs in the plurality of channels are also different. For example, the plurality of channels may include N channels, delays provided by delayers DLs in the N channels may be respectively τ₁, τ₂, ..., and τ_{N}, and phases provided by phase shifters PSs in the N channels may be respectively φ₁, φ₂, ..., and φ_{N}.

An implementation of the delayer DL in the foregoing parallel-feeding dispersion architecture is a serial bit (bit) structure, for example, as shown in FIG. 4. The complexity of the delayer of the architecture is related to a delay step and a quantity of array elements. For example, an example in which a center frequency is 6.8 GHz, a bandwidth is 400 MHz, and a spacing between antenna elements is 0.5 wavelength is used. Table 1 in the following shows maximum delay amounts and quantities of delayer bits that correspond to several different quantities of array elements, dispersion spreading requirements, and delay difference requirements. It can be learned from Table 1 that, when a finer delay step or more antenna elements are needed, the complexity of the delayer is multiplied. In addition, a complex delayer structure is accompanied by a complex control circuit. A complex delayer introduces greater insertion losses and component costs, and occupies more layout areas. This is quite unfavorable to indicators such as costs and a size of a base station.

**Table 1**

| Center frequency: 6.8 GHz; bandwidth: 400 MHz; spacing between antenna elements: 0.5 wavelength | | | | |
|---|---|---|---|---|
| Quantity of array elements | Dispersion spreading requirement | Delay difference requirement | Maximum delay amount | Quantity of delayer bits |
| Eight antenna elements | 0° | 0 | 0 | Four bits 330 ps step |
| | 15° | 330 ps | 2310 ps | |
| | 30° | 650 ps | 4550 ps | |
| Twelve antenna elements | 0° | 0 | 0 | Five bits 330 ps step |
| | 15° | 330 ps | 3630 ps | |
| | 30° | 650 ps | 7150 | |
| Eight antenna elements | 0° | 0 | 0 | Five bits 160 ps step |
| | 15° | 330 ps | 2310 ps | |
| | 20° | 450 ps | 3135 ps | |
| | 30° | 650 ps | 4550 ps | |

Based on this, an embodiment of this application provides a communication apparatus, to resolve the problems existing in the series-feeding dispersion architecture and the parallel-feeding dispersion architecture. The communication apparatus may be used in a communication device. The communication device may include but is not limited to base stations such as a macro base station, a micro base station, a NodeB (NodeB, NB), an eNB (eNodeB), and a gNB (NR NodeB). Optionally, the communication device may further include but is not limited to user equipment such as a mobile phone, a tablet computer, a notebook computer, a computer, an ultra-mobile personal computer (ultra-mobile personal computer, UMPC), a netbook, a media player, a vehicle-mounted device (for example, an automobile, a bicycle, an electric vehicle, an airplane, a ship, a train, or a high-speed railway), a virtual reality (virtual reality, VR) device, or an augmented reality (augmented reality, AR) device.

The following uses a base station as an example to illustrate a structure of the communication device.

FIG. 5 is a diagram of a structure of a communication device according to an embodiment of this application. The communication device includes a digital signal processing circuit, an intermediate frequency signal processing circuit, a radio frequency signal processing circuit, and an antenna array that are sequentially coupled. The digital signal processing circuit may be configured to implement operation and maintenance of the entire communication device, implement signaling processing, a radio resource principle, and a transmission interface to a packet core network, and implement functions of a physical layer, a medium access control layer, L3 signaling, and operation and maintenance main control. The intermediate frequency signal processing circuit and the radio frequency signal processing circuit are configured to implement conversion between a baseband signal, an intermediate frequency signal, and a radio frequency signal, and implement demodulation of a radio received signal, modulation and power amplification of a sent signal, and the like. The antenna array may include a plurality of antenna elements, and may be configured to transmit an electromagnetic wave signal to space or receive an electromagnetic wave signal from space. Optionally, the intermediate frequency signal processing circuit and the radio frequency signal processing circuit may alternatively be integrated together, and are collectively referred to as an intermediate radio frequency signal processing circuit.

In a possible embodiment, when the communication device is a base station, user equipment such as a mobile phone and a tablet computer may access a core network by using the base station, and then access the Internet by using the core network. In this way, data of the Internet may be transferred to the base station through an interface between the core network and the base station. After performing a series of processing on the data by using the foregoing plurality of processing circuits, the base station may transmit the data to the user equipment through the antenna array. The interface between the user equipment and the base station may be understood as an air interface for communication between the user equipment and the base station, or may also be referred to as a Uu interface.

The following describes a structure of a communication apparatus provided in embodiments of this application.

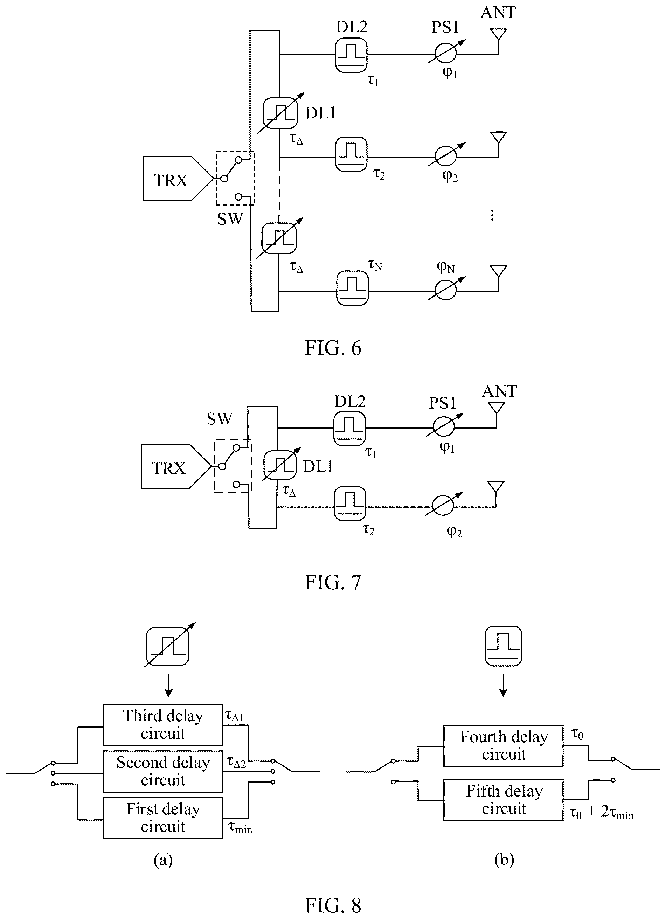

FIG. 6 is a diagram of a structure of a communication device according to an embodiment of this application. The communication apparatus may include at least one first delayer DL1 and a plurality of channels. Each channel in the plurality of channels has a first end and a second end, one first delayer DL1 is coupled between first ends of any two adjacent channels in the plurality of channels, and second ends of the plurality of channels are coupled to a plurality of antenna elements ANT in an antenna array. Each channel in the plurality of channels includes a second delayer DL2 and a first phase shifter PS1 that are coupled. For example, in a specific channel, one end of the second delayer DL2 may be coupled to a first end of the channel, the other end of the second delayer DL2 may be coupled to one end of the first phase shifter PS1, and the other end of the first phase shifter PS1 may be coupled to a second end of the channel.

The at least one first delayer DL1 may include one or more first delayers DL1, and the plurality of channels may include two or more channels. In FIG. 6, an example in which the plurality of channels include N channels, and the at least one first delayer DL1 includes (N - 1) first delayers DL1 is used for description.

In addition, the at least one first delayer DL1 may be configured to adjust a delay difference between signals transmitted in the plurality of channels. The second delayer DL2 in each channel may be configured to compensate for a delay difference between signals transmitted in the channel, so that the second delayer DL2 may also be referred to as a delay compensator.

In the communication apparatus, delays provided by the at least one first delayer DL1 when the communication apparatus operates may be the same, and delays provided by the second delayers DL2 in the plurality of channels when the communication apparatus operates may be the same, or delay differences between any two adjacent channels may be the same. For example, an example in which the plurality of channels include the N channels is used. The at least one first delayer DL1 includes the (N - 1) first delayers DL1, and the delays provided by the (N - 1) first delayers DL1 when the communication apparatus operates may be represented as τ△. The delays of the second delayers DL2 in the N channels may be respectively represented as τ₁, τ₂, ..., and τ_{N}, for example, τ₁ = τ₂ = ... = τ_{N}, or τ₂ - τ₁ = τ₃ - τ₂ = ... = τ_{N} - τ_{N-1}. In the figure, phases provided by the first phase shifters PS1 in the N channels may be respectively φ₁, φ₂, ..., and φ_{N}.

In a possible example, as shown in FIG. 7, the communication apparatus may include a first delayer DL1, a first channel, and a second channel, where the first delayer DL1 is coupled to a first end of the first channel and a first end of the second channel, and a second end of the first channel and a second end of the second channel are each coupled to one antenna element ANT in the antenna array. Both the first channel and the second channel include a second delayer DL2 and a first phase shifter PS1 that are coupled.

Optionally, the communication apparatus may further include a transceiver circuit TRX coupled to the first ends of the plurality of channels. In a possible embodiment, the transceiver circuit TRX may include but is not limited to one or more of a digital-to-analog converter, an analog-to-digital converter, a duplexer, and an amplifier AMP.

In this embodiment of this application, the at least one first delayer DL1 and the second delayers DL2 in the plurality of channels form a series-parallel feeding dispersion architecture, so that the communication apparatus can implement a frequency division multi-beam, and complexity of the first delayer DL1 can be reduced compared with that in the foregoing parallel-feeding dispersion architecture. In addition, delays of the at least one first delayer DL1 and the second delayers DL2 in the plurality of channels are set, so that delay differences between the plurality of channels may be further enabled to be 0, thereby implementing a non-dispersive beam. In addition, the first phase shifters PS1 of all channels in the plurality of channels are used together, so that the communication apparatus can implement a beam sweeping function in both the frequency division multi-beam and the non-dispersive beam.

Further, the first delayer DL1 and the second delayer DL2 may each have a plurality of delay stages, and each of the delay stages may correspond to one delay circuit. When the communication apparatus operates, the first delayer DL1 and the second delayer DL2 may provide delays by using different delay stages.

The following uses an example to describe structures of the first delayer DL1 and the second delayer DL2 in the communication apparatus.

As shown in (a) in FIG. 8, each first delayer DL1 may include a first delay circuit, a second delay circuit, and a third delay circuit with different delays and disposed in parallel. Specifically, the first delayer DL1 may be configured to selectively provide a delay for the communication apparatus by using one of the first delay circuit, the second delay circuit, and the third delay circuit. Optionally, each first delayer DL1 may further include a first gating switch, and the first gating switch may be configured to select one of the first delay circuit, the second delay circuit, and the third delay circuit.

Both a delay of the second delay circuit and a delay of the third delay circuit are greater than a delay of the first delay circuit. For example, the delay of the first delay circuit may be a minimum delay and may be represented as τₘᵢₙ, the delay of the second delay circuit may be represented as τ_{△1}, and the delay of the third delay circuit may be represented as τ_{△2}, where τ_{△1} and τ_{△2} are not equal and are both greater than τₘᵢₙ. Specific values of the delays (in other words, τₘᵢₙ, τ_{△1}, and τ_{△2}) respectively provided by the first delay circuit, the second delay circuit, and the third delay circuit may be set based on an actual need. This is not specifically limited in this embodiment of this application.

As shown in (b) in FIG. 8, the second delayer DL2 of each channel may include a fourth delay circuit and at least one fifth delay circuit that are disposed in parallel. In the figure, an example in which the at least one fifth delay circuit includes one fifth delay circuit is used for description. Specifically, the second delayer DL2 may be configured to selectively provide a delay for the communication apparatus by using one of the fourth delay circuit and the at least one fifth delay circuit. Optionally, the second delayer DL2 may further include a second gating switch, and the second gating switch may be configured to select one of the fourth delay circuit and the at least one fifth delay circuit.

When the at least one fifth delay circuit includes a plurality of fifth delay circuits, delays of the plurality of fifth delay circuits are different. A delay of each fifth delay circuit in the at least one fifth delay circuit may be equal to a delay of the fourth delay circuit and an integer multiple of a preset delay. Optionally, the delay of the first delay circuit may be equal to the preset delay. For example, the delay of the fourth delay circuit may be represented as τ₀, the preset delay may be the minimum delay τₘᵢₙ, and the delay of each fifth delay circuit may be represented as τ₀ + i × τₘᵢₙ, where 1 is a positive integer. For example, the at least one fifth delay circuit includes one fifth delay circuit, and a corresponding delay may be represented as τ₀ + 2τₘᵢₙ. Specific values of the delays (in other words, τ₀ and τ₀ + i × τₘᵢₙ) respectively provided by the fourth delay circuit and the at least one fifth delay circuit may be set based on an actual need. This is not specifically limited in this embodiment of this application.

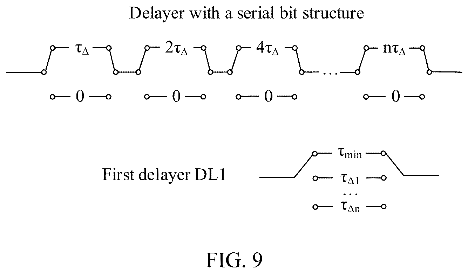

Compared with the delayer with the serial bit structure in the parallel dispersion-based architecture described above, the first delayer DL1 provided in this embodiment of this application can reduce a quantity of pins PINs by 50% when a same bit delay is implemented, and can further simplify the delayer. For example, as shown in FIG. 9, an example in which the delays provided by the delayers of the serial bit structure include τ₀ to nτ₀, and the delays provided by the first delayers DL1 may include τₘᵢₙ and τ_{△1} to τ_{△n} is used for description.

It may be understood that the structures of the first delayer DL1 and the second delayer DL2 provided in this embodiment of this application are merely examples. During actual application, the first delayer DL1 and the second delayer DL2 may further include more delay circuits (in other words, include more delay stages), or may be other circuit structures that can implement corresponding functions. This is not specifically limited in this embodiment of this application.

Optionally, the communication apparatus may further include a control circuit. The control circuit may be configured to control the at least one first delayer DL1 and the second delayer DL2 of each of the plurality of channels. When the first delayer DL1 and the second delayer DL2 each have a plurality of delay stages, the control circuit CTR may be specifically configured to control the delay stages of the first delayer DL1 and the delay stages of the second delayer DL2.

In an example, when the first delayer DL1 includes the first gating switch, the first delay circuit, the second delay circuit, and the third delay circuit, the control circuit may be specifically configured to control the first gating switch to select one of the first delay circuit, the second delay circuit, and the third delay circuit, in other words, control to select one delay stage of the first delayer DL1.

In another example, when the second delayer DL2 includes the second gating switch, the fourth delay circuit, and the at least one fifth delay circuit, the control circuit may be specifically configured to control the second gating switch to select one of the fourth delay circuit and the at least one fifth delay circuit, in other words, control to select one delay stage of the second delayer DL2.

In some possible embodiments, when the communication apparatus is configured to implement a frequency division multi-beam function, the control circuit may control the at least one first delay circuit DL1 to select a delay circuit corresponding to a same delay stage, and control the second delayers DL2 in the plurality of channels to select the fourth delay circuit (in other words, selected delays are all τ₀). When the communication apparatus is configured to implement a non-dispersive beam, the control circuit may control the at least one first delay circuit DL1 to select the first delay circuit (in other words, selected delays are all τ₀), control the second delayers DL2 in the plurality of channels to select the fourth delay circuit (in other words, select the minimum delay τₘᵢₙ), and control the second delayers DL2 in the plurality of channels to respectively select different delay stages (for example, the selected delay stages are τ₀ + i x τₘᵢₙ, where a value of i is 1, 2, ..., or N).

In this embodiment of this application, when the communication apparatus is configured to implement a frequency division multi-beam function, the control circuit may control the at least one first delayer DL1 by using a same control signal, and control the second delayers DL2 in the plurality of channels by using a same control signal, so that complexity of the control circuit can be simplified.

Further, the communication apparatus may further include a switching switch SW. A first selection end of the switching switch SW is coupled to a first end of a 1^{st} channel in the plurality of channels, and a second selection end of the switching switch SW is coupled to a 1^{st} end of a last channel in the plurality of channels. In an example, the switching switch SW may be a single-pole double-throw switch.

In the communication apparatus, when the switching switch SW is configured to select the first end of the 1^{st} channel in the plurality of channels, when the communication apparatus implements the frequency division multi-beam function, a corresponding dispersion spreading direction is from the 1^{st} channel to the last channel; or when the switching switch SW is configured to select the first end of the last channel in the plurality of channels, when the communication apparatus implements the frequency division multi-beam function, a corresponding dispersion spreading direction is from the last channel to the 1^{st} channel. In other words, a dispersion spreading direction of the communication apparatus may be changed by using the switching switch SW, thereby improving flexibility of the frequency division multi-beam and integrity of spatial domain information.

Optionally, when the communication apparatus further includes the control circuit, the control circuit may be further configured to control the switching switch SW. For example, the control circuit may be further configured to control the switching switch SW to select the first end of the 1^{st} channel in the plurality of channels, or select the first end of the last channel in the plurality of channels.

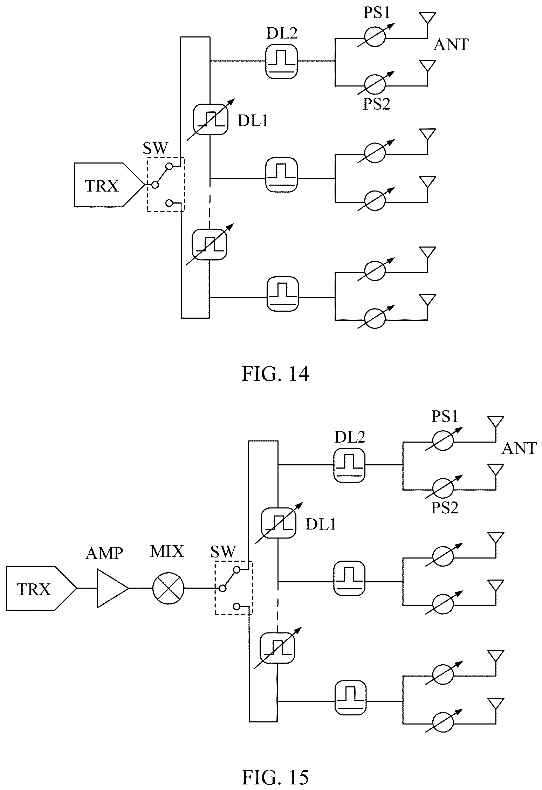

For ease of understanding, the following uses the structures of the first delayer DL1 and the second delayer DL2 shown in FIG. 8 as an example to illustrate the frequency division multi-beam and the non-dispersive beam that are implemented by the communication apparatus. A structure of the communication apparatus used in this example may be shown in FIG. 14 below. In the following example, a beam frequency unit is GHz, and a center frequency f0 in the frequency division multi-beam is 6.8 (in other words, f0 = 6.8).

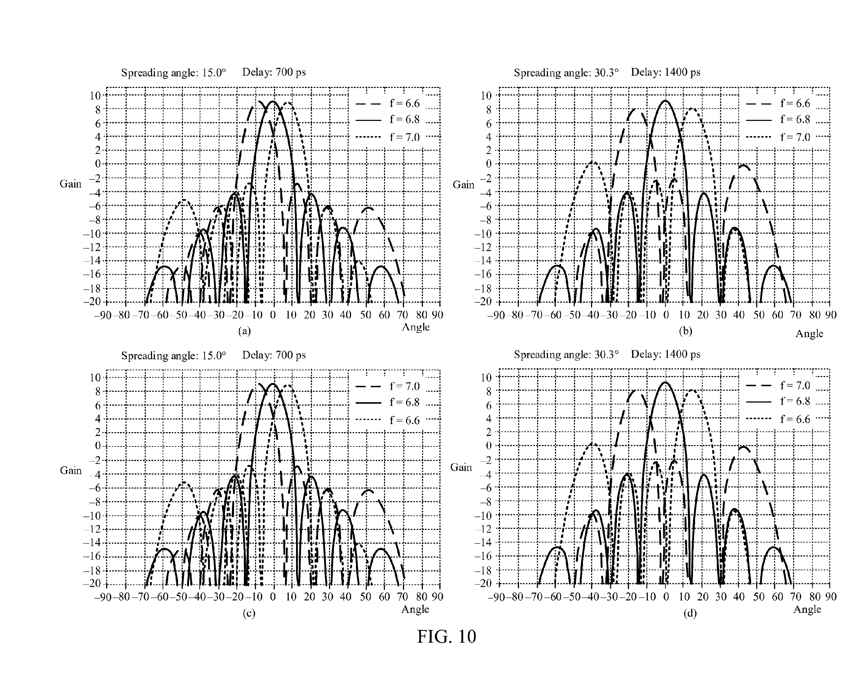

In an example, when the switching switch SW is configured to select the first end of the 1^{st} channel in the plurality of channels, a corresponding spreading angle (spreading angle) is 15.0°, and a delay (delay) of the center frequency f0 is 700 ps, the frequency division multi-beam (in other words, f = 6.6, f = 6.8, and f = 7.0) implemented by the communication apparatus is shown in (a) in FIG. 10. When the switching switch SW is configured to select the first end of the 1^{st} channel in the plurality of channels, a corresponding spreading angle is 30.3°, and a delay of the center frequency f0 is 1400 ps, the frequency division multi-beam (in other words, f = 6.6, f = 6.8, and f = 7.0) implemented by the communication apparatus is shown in (b) in FIG. 10.

In another example, when the switching switch SW is configured to select the first end of the last channel in the plurality of channels, a corresponding spreading angle is 15.0°, and a delay of the center frequency f0 is 700 ps, the frequency division multi-beam (in other words, f = 7.0, f = 6.8, and f = 6.6) implemented by the communication apparatus is shown in (c) in FIG. 10. When the switching switch SW is configured to select the first end of the 1^{st} channel in the plurality of channels, a corresponding spreading angle is 30.3°, and a delay of the center frequency f0 is 1400 ps, the frequency division multi-beam (in other words, f = 7.0, f = 6.8, and f = 6.6) implemented by the communication apparatus is shown in (d) in FIG. 10.

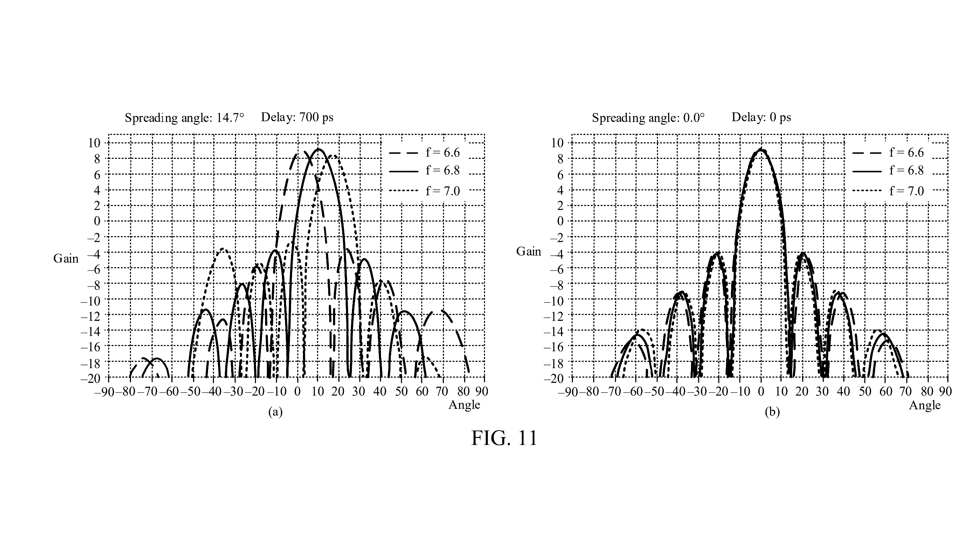

In still another example, when the switching switch SW is configured to select the first end of the last channel in the plurality of channels, and by configuring phase shifters in the plurality of channels, a corresponding spreading angle may be enabled to be 14.7°, and a delay of the center frequency f0 may be enabled to be 700 ps, the frequency division multi-beam (in other words, f = 6.6, f = 6.8, and f = 7.0) implemented by the communication apparatus is shown in (a) in FIG. 11. When the first delayer DL1 and the second delayer DL2 in the communication apparatus are configured so that the communication apparatus implements the non-dispersive beam (in other words, f = 6.6, f = 6.8, and f = 7.0), a corresponding non-dispersive beam is shown in (b) in FIG. 11.

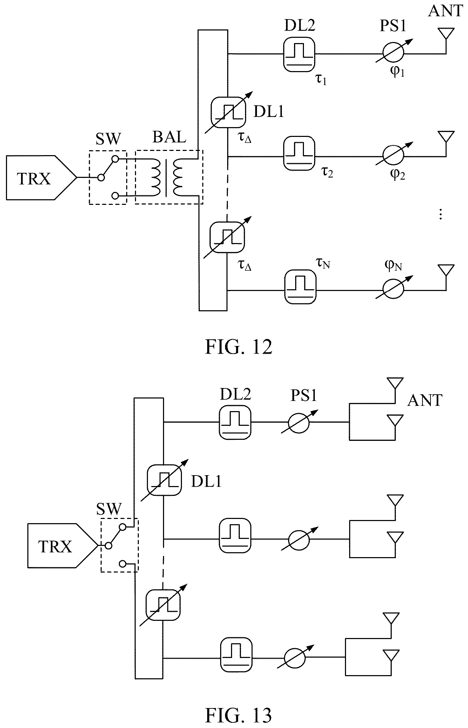

In addition, as shown in FIG. 12, the communication apparatus may further include a balun circuit BAL. A first single port and a second single port of the balun circuit BAL are respectively coupled to the first selection end and the second selection end of the switching switch SW, and a differential port of the balun circuit SW is coupled to each of the first end of the 1^{st} channel and the first end of the last channel in the plurality of channels. Specifically, the balun circuit BAL may be configured to convert a single-ended signal into a differential signal, so that the communication apparatus may be configured to perform corresponding processing and transmission on the differential signal.

Further, the second end of each of the plurality of channels may be coupled to one antenna element in the antenna array, or may be coupled to one subarray in the antenna array, and the subarray may include at least two antenna elements. In other words, the second end of each channel may be coupled to at least one antenna element in the antenna array.

In a possible example, as shown in FIG. 6, FIG. 7, or FIG. 12, the plurality of antenna elements in the antenna array may include a plurality of first antenna elements, and the second end of each of the plurality of channels may be coupled to one first antenna element.

In another possible example, as shown in FIG. 13, the plurality of antenna elements in the antenna array may include the plurality of first antenna elements and a plurality of second antenna elements, and the second end of each of the plurality of channels may be coupled to one first antenna element and one second antenna element.

In addition, when the second end of each channel is coupled to the plurality of antenna elements, the plurality of antenna elements may all be coupled to a same phase shifter, or may be respectively coupled to different phase shifters. For example, as shown in FIG. 13, when the second end of each channel is coupled to one first antenna element and one second antenna element, the first antenna element and the second antenna element may both be coupled to the first phase shifter PS1. For another example, as shown in FIG. 14, when the second end of each channel is coupled to one first antenna element and one second antenna element, each channel may further include a second phase shifter PS2 coupled in parallel to the first phase shifter PS1, the first antenna element may be correspondingly coupled to the first phase shifter PS1, and the second antenna element may be correspondingly coupled to the second phase shifter PS2.

In the communication apparatus provided in this embodiment of this application, when each of the plurality of channels is coupled to at least two antenna elements in the antenna array, complexity of the communication apparatus can be reduced when a scale of the antenna array is large, thereby reducing costs and an area of the communication apparatus. In addition, when each channel is coupled to the at least two antenna elements, and each antenna element in the at least two antenna elements is correspondingly coupled to one phase shifter, flexibility of adjusting a signal phase corresponding to each antenna element can be improved.

Further, the communication apparatus may further include an amplifier AMP, and the amplifier AMP may be disposed at different positions in the communication apparatus. Optionally, the amplifier AMP may be disposed before the plurality of channels and coupled to the first ends of the plurality of channels; each channel includes one amplifier AMP, and the amplifier AMP is disposed after the second delayer DL2 and before the phase shifter in the channel; or each channel includes at least one amplifier AMP, and the at least one amplifier AMP is disposed after the phase shifter of the channel and before the at least one coupled antenna element. Optionally, the amplifier AMP may include a low noise amplifier LNA and/or a power amplifier PA. The following uses an example to describe a position at which the amplifier AMP is disposed in the communication apparatus.

In a possible example, the communication apparatus further includes the amplifier AMP, and the amplifier AMP is disposed before the plurality of channels. For example, as shown in FIG. 15, when the communication apparatus further includes the switching switch SW, the amplifier AMP may be specifically coupled between the transceiver circuit TRX and a fixed end of the switching switch SW.

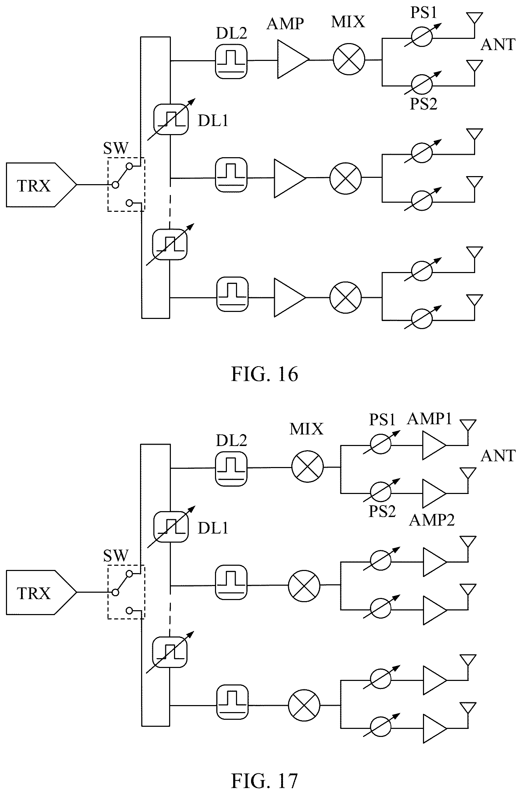

In another possible example, each of the plurality of channels further includes the amplifier AMP, and the amplifier AMP may be coupled after the second delayer DL2 of the channel. For example, as shown in FIG. 16, the amplifier AMP may be coupled between the second delayer DL2 and the first phase shifter PS1 (or at a coupling point between the first phase shifter PS1 and the second phase shifter PS2) in the channel.

In still another possible example, each of the plurality of channels further includes the amplifier AMP, and the amplifier AMP may be coupled after the phase shifter of the channel. For example, as shown in FIG. 17, a first amplifier AMP1 is disposed between the first phase shifter PS1 of each channel and the first antenna element correspondingly coupled to the channel. Further, when the second end of each channel is further coupled to the second antenna element, a second amplifier AMP1 may be further disposed between the second phase shifter PS2 of each channel and the second antenna element correspondingly coupled to the channel.

In the communication apparatus provided in this embodiment of this application, when each channel further includes the amplifier AMP, and the amplifier is coupled after the phase shifter of the channel, impact of insertion losses of the delayers (for example, the first delayer DL1 and the second delayer DL2) and the phase shifters (for example, the first phase shifter PS1 and the second phase shifter PS2) in the communication apparatus on EIRP of the communication apparatus can be reduced. When each channel further includes the amplifier AMP, and the amplifier AMP is coupled after the second delayer DL2 of the channel, insertion losses of the delayers (for example, the first delayer DL1 and the second delayer DL2) in the communication apparatus can be reduced, and a quantity of amplifiers AMPs needed by the communication apparatus is reduced to some extent. When the communication apparatus further includes amplifiers AMPs disposed before the plurality of channels, a quantity of amplifiers AMPs needed by the communication apparatus can be reduced to a maximum extent, thereby reducing costs and an area of the communication apparatus.

Further, the communication apparatus may further include a mixer MIX, and the mixer MIX may also be disposed at different positions in the communication apparatus. Optionally, the mixer MIX may be disposed before the plurality of channels and coupled to the first ends of the plurality of channels; or each channel includes one mixer MIX, and the mixer MIX is disposed after the second delayer DL2 and before the phase shifter in the channel. The following uses an example to describe a position at which the mixer MIX is disposed in the communication apparatus.

In a possible example, the communication apparatus further includes the mixer MIX, and the mixer MIX is disposed before the plurality of channels. For example, as shown in FIG. 15, when the communication apparatus further includes the switching switch SW and the amplifier AMP coupled to the fixed end of the switching switch, the mixer MIX is specifically coupled between the amplifier and the fixed end of the switching switch.

In another possible example, each of the plurality of channels further includes the mixer MIX, and the mixer MIX may be coupled after the second delayer DL2 of the channel. For example, as shown in FIG. 16, when each channel further includes the amplifier AMP coupled after the second delayer DL2 of the channel, the mixer MIX may be specifically coupled between the amplifier AMP and the first phase shifter PS1 (or at the coupling point between the first phase shifter PS1 and the second phase shifter PS2).

In the communication apparatus provided in this embodiment of this application, when the mixer MIX is coupled before the plurality of channels, a signal transmitted by the mixer MIX to the plurality of channels is a radio frequency signal, and the at least one first delayer DL1 and the second delayer DL2 of each of the communication apparatus may be configured to perform delay processing on the radio frequency signal. When each channel further includes the mixer coupled after the second delayer DL2, the at least one first delayer DL1 and the second delayer DL2 of each of the communication apparatus may be configured to perform delay processing on an intermediate frequency signal, and a signal obtained after the delay processing in each channel is converted into a radio frequency signal by using the mixer MIX.

It may be understood that, in FIG. 15 to FIG. 17, an example in which the second end of each channel is coupled to two antenna elements in the communication apparatus is used for description, to illustrate positions of the amplifier AMP and the mixer MIX in the communication apparatus. The foregoing examples do not constitute a limitation on implementation of this application.

In addition, the communication apparatus provided in embodiments of this application may be further applied to a sensing scenario. For example, in a process of searching for a target, the frequency division multi-beam function of the communication apparatus may be used to quickly sense a target status in target space, and after a basic target status is determined, the non-dispersive beam of the communication apparatus is used to perform tracking and related subsequent processing.

Based on this, an embodiment of this application further provides a chip module. The chip module includes a chip and a package substrate. The chip may include any communication apparatus provided above. The package substrate may include the antenna array that has the plurality of antenna elements provided above. The plurality of antenna elements are coupled to the second ends of the plurality of channels in the communication apparatus.

Another aspect of this application further provides a communication device. The communication device may include a digital signal processing circuit, and any communication apparatus or chip module provided above. Optionally, the communication device may be a base station. In a possible example, the base station may include a digital signal processing circuit and a communication apparatus coupled to the digital signal processing circuit. The digital signal processing circuit may be configured to send a digital signal to the communication apparatus, process the digital signal transmitted by the communication apparatus, and the like.

The foregoing detailed descriptions of related content of the communication apparatus may be correspondingly referenced to the embodiments corresponding to the chip module and the communication device. Details are not described herein again in this embodiment of this application.

In the several embodiments provided in this application, it should be understood that the disclosed communication apparatus, chip module, and communication device may be implemented in other manners. For example, the described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual needs to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor to perform all or some of the steps of the methods described in embodiments of this application. The foregoing storage medium includes any medium that can store program code, such as a USB flash disk, a removable hard disk drive, a read-only memory, a random access memory, a magnetic disk, or an optical disc.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication apparatus, wherein the communication apparatus comprises:
at least one first delayer and a plurality of channels, wherein
each of the plurality of channels has a first end and a second end, there is one first delayer coupled between first ends of any two adjacent channels in the plurality of channels, and second ends of the plurality of channels are coupled to a plurality of antenna elements in an antenna array; and
each of the plurality of channels comprises a second delayer and a first phase shifter that are coupled.

2. The communication apparatus according to claim 1, wherein each first delayer in the at least one first delayer comprises a first delay circuit, a second delay circuit, and a third delay circuit with different delays and disposed in parallel; and
a delay of the second delay circuit and a delay of the third delay circuit are both greater than a delay of the first delay circuit.

3. The communication apparatus according to claim 1 or 2, wherein the second delayer of each of the plurality of channels comprises a fourth delay circuit and a fifth delay circuit that are disposed in parallel; and
a delay of the fifth delay circuit is equal to a delay of the fourth delay circuit and an integer multiple of a preset delay.

4. The communication apparatus according to claim 3, wherein the delay of the first delay circuit is equal to the preset delay.

5. The communication apparatus according to any one of claims 1 to 4, wherein the communication apparatus further comprises a switching switch, wherein a first selection end of the switching switch is coupled to a first end of a 1^{st} channel in the plurality of channels, and a second selection end of the switching switch is coupled to a first end of a last channel in the plurality of channels.

6. The communication apparatus according to claim 5, wherein the communication apparatus further comprises a balun circuit, a first single port and a second single port of the balun circuit are respectively coupled to the first selection end and the second selection end of the switching switch, and a differential port of the balun circuit is coupled to both the first end of the 1^{st} channel in the plurality of channels and the first end of the last channel in the plurality of channels.

7. The communication apparatus according to any one of claims 1 to 6, wherein the plurality of antenna elements comprise a plurality of first antenna elements, and the second end of each of the plurality of channels is coupled to one first antenna element.

8. The communication apparatus according to claim 7, wherein the plurality of antenna elements further comprise a plurality of second antenna elements, and the second end of each of the plurality of channels is further coupled to one second antenna element.

9. The communication apparatus according to claim 8, wherein each of the plurality of channels further comprises a second phase shifter coupled in parallel to the first phase shifter; and
the first phase shifter is correspondingly coupled to the first antenna element, and the second phase shifter is correspondingly coupled to the second antenna element.

10. The communication apparatus according to any one of claims 1 to 9, wherein each of the plurality of channels further comprises an amplifier coupled to the first phase shifter.

11. The communication apparatus according to any one of claims 1 to 10, wherein the communication apparatus further comprises a first mixer coupled to the first ends of the plurality of channels; or
each of the plurality of channels further comprises a second mixer coupled between the second delayer and the first phase shifter.

12. The communication apparatus according to any one of claims 1 to 11, wherein the communication apparatus further comprises:
a control circuit, configured to control the at least one first delayer and the second delayer of each of the plurality of channels.

13. The communication apparatus according to any one of claims 1 to 12, wherein the communication apparatus further comprises a transceiver circuit coupled to the first ends of the plurality of channels.

14. A communication device, wherein the communication device comprises a digital signal processing circuit and the communication apparatus according to any one of claims 1 to 13.
